(19) Europäisches Patentamt
European Patent Office
Office européen des brevets

(11) EP 2 784 138 A2

(12) **EUROPEAN PATENT APPLICATION**

(43) Date of publication:
**01.10.2014 Bulletin 2014/40**

(21) Application number: **14173240.4**

(22) Date of filing: **06.11.2009**

(51) Int Cl.:
***C09D 5/03*** *(2006.01)* ***C09D 4/00*** *(2006.01)*
***C08K 5/00*** *(2006.01)* ***C09D 167/00*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.11.2008 US 112390 P**
**07.11.2008 US 112384 P**
**19.12.2008 EP 08172327**

(62) Document number(s) of the earlier application(s) in accordance with Art. 76 EPC:
**09748334.1 / 2 342 286**

(71) Applicant: **DSM IP Assets B.V.**
**6411 TE Heerlen (NL)**

(72) Inventor: **Jansen, Johan Franz Gradus Antonius**
**6100 AA ECHT (NL)**

(74) Representative: **Diakoumakos, Konstantinos**
**DSM Intellectual Property**
**P.O. Box 4**
**6100 AA Echt (NL)**

Remarks:
This application was filed on 20-06-2014 as a divisional application to the application mentioned under INID code 62.

(54) **Heat-curable powder coating composition**

(57) The invention relates to a heat-curable powder coating composition comprising a resin containing reactive unsaturations, a vinyl ester having a molecular weight (Mn) of at most 800Da comprising at least one vinylester moiety of formula (1)

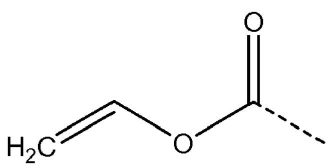

(1)

, a thermal initiation system comprising a radical initiator.

The composition may be a one component or a two component system.

The composition provides a coating having an acceptable cure at low temperatures.

EP 2 784 138 A2

## Description

The invention relates to a heat-curable powder coating composition, a process for the preparation thereof, use of the powder coating composition to coat a substrate therewith, a substrate coated with the powder coating composition and a process for coating a substrate using the powder coating composition.

The powder coating composition of the present invention provides for a powder coating having a good cure. In a special embodiment of the invention, the powder coating composition can be cured at low temperatures of for example 60 to 130°C.

As shown by the article "Overview of the powder coatings market worldwide" by G. Maggiore in Pitture e Vernice Europe 1/92, pp. 15-22 and by the lecture by D. Richart "Powder Coating: Current Developments, Future Trends" (Waterborne, High-Solids and Powder Coatings Symposium, February 22-24, 1995), the search is still continuing for powder coating compositions which can be cured with little thermal stress of the substrate and which consequently are suitable for use on heat-sensitive substrates such as, for example, wood and plastic.

Besides the desire for a powder coating composition that can be cured at low temperature, it is also desired that such a powder coating composition can still be processed in an extruder.

Therefore, there is a need for a powder coating composition that balances the ability to be cured at a low temperature of for example 60 to 130°C thereof with a good processability in an extruder.

It is the object of the present invention to provide a heat curable powder coating composition which is easily processable in the extruder and which can be partially or fully thermally cured at low temperatures, for example between 60-130°C, making it suitable for use not only for non heat-sensitive substrates, but in particular also for heat-sensitive substrates.

In order to achieve this object, the person skilled in the art would normally use a very reactive thermally curable system.

However, it has surprisingly been found that a thermally curable powder coating composition comprising a vinylester (which is less reactive than a vinylether in thermal radical polymerization with resins containing reactive unsaturations) provides a powder coating composition that is curable at a lower temperature (compared to a powder coating composition comprising a vinylether) and which powder coating composition can still be easily processed in the extruder.

Therefore, the invention relates to a heat-curable powder coating composition comprising a resin containing reactive unsaturations, a vinyl ester having a molecular weight (Mn) of at most 800Da comprising at least one vinylester moiety of formula (1)

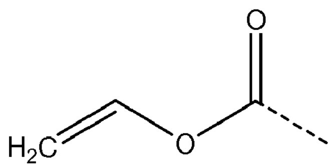

(1)

and a thermal initiation system comprising a radical initiator.

Due to the presence of the vinylester, the powder coating composition of the invention provides for a powder coating having a sufficient cure, especially a lower temperatures (as can for example be measured with acetone double rubs).

For the purpose of the invention with one acetone double rub (ADR) is meant one back and forward movement over the surface of a coating having a thickness of approximately 60 μm using a cotton cloth drenched in acetone, which cotton cloth covers a hammer head having a weight of 980 gram and a contact surface area with the coating of 2 $cm^2$. Every 20 rubs the cloth is drenched in acetone. The measurement is continued until the coating is removed (and the obtained ADR number is noted down) or until 100 ADR are reached.

An additional advantage of the powder coating composition of the invention is that they provide coatings having a good chemical resistance as measured in a so-called chemical resistance test or staining test according to DIN 68861-1A of the year 1997.

With heat curable is meant within the framework of the current invention that curing of the powder coating composition can be effected by using heat. A thermal initiation system is present in the composition of the present invention to make this heat curing possible. Heat curing has the advantage that in a one step process of heating a powder coating composition without the use of additional equipment, for instance equipment that generates UV light or accelerated electrons, the powder coating can be melted and cured onto a substrate, whereas with radiation curing of a powder coating composition on a substrate two steps are needed to melt and cure a powder coating on a substrate. In such a two step of radiation curing, first the powder coating composition is melted onto the substrate using heat, after which it

is cured using UV or electron beam irradiation. Heat curing is especially desirable for coating 3D objects.

With easily processable in the extruder is meant that the powder coating composition can be extruded to form an extrudate without forming gel particles, preferably without forming a gel.

Preferably, the powder coating composition of the present invention is cured at a temperature of from 60 to 130°C. More preferably, the curing temperature is at least 65°C, even more preferably at least 70°C, for example at least 75°C, for example at least 80°C. More preferably, the curing temperature is at most 125°C, even more preferably at most 120°C, in particular at most 115°C, in particular at most 110°C, for example at most 105°C or for example at most 100°C. In special cases, for example for substrates that are more heat-sensitive, it may be of advantage to cure the powder coating composition at an even lower temperature, for example at a temperature lower than 100°C, lower than 95°C, lower than 90°C or even lower than 85°C.

With 'powder coating composition' is meant a composition that can be applied to a substrate as a dry (without solvent or other carrier) finely divided solid, which when melted and fused, forms a continuous film that adheres to the substrate.

In one embodiment, the powder coating composition is a one component system. With a 'one component system' as used herein, also called a 1 K system, is meant that all (reactive) components of the powder coating composition form part of one powder.

In another embodiment, the powder coating composition is a two component system. A two component system, also called 2K system, is a system wherein the powder coating composition is composed of at least two different powders with different chemical compositions, which keeps the reactive components physically separated. The at least two different powders may be mixed in a physical blend before the powder coating composition is put in the storage container or may be mixed just before applying the 2K system to a substrate to let a curing reaction take place. The compositions of the at least two different powders in the 2K system are usually selected such that each powder contains an ingredient which is needed for curing but is absent from the other powder(s). This separation allows preparation of the individual powder composition in a heated state (such as by melt mixing) without the initiation of the cure reaction.

The resin contains reactive unsaturations in which the reactive unsaturations are carbon carbon double or triple bonds, preferably the reactive unsaturations in the resin are carbon carbon double bonds connected directly to an electron withdrawing group. The carbon carbon double bonds connected directly to an electron withdrawing group are reactive towards radicals generated by a thermal initiator. For the avoidance of doubt, reactive unsaturations do not include aromatic rings.

Preferably, all reactive unsaturations in the resin are carbon carbon double bonds connected directly to an electron withdrawing group. Examples of suitable resins include polyesters, polyacrylates (= acrylic resins), polyurethanes, epoxy resins, polyamides, polyesteramides, polycarbonates, polyureas etc., as well as mixtures thereof. Preferably the resin is a polyester.

The reactive unsaturations (the carbon carbon double bonds connected directly to an electron withdrawing group) may be present in the backbone of the resin, pendant on the (backbone of the) resin, at the terminus of the resin or at a combination of these locations. Preferably resins having reactive unsaturations based on fumaric acid, maleic acid and/or itaconic acid, more preferably resins having reactive unsaturations based on fumaric acid and/or maleic acid are used in the powder coating composition of the present invention.

Examples of how to introduce the reactive unsaturation in the resin are described below.

Polyesters are generally polycondensation products of polyalcohols and polycarboxylic acids.

Examples of polycarboxylic acids which may be used in the preparation of a polyester include isophthalic acid, terephthalic acid, hexahydroterephthalic acid, 2,6-naphthalenedicarboxylic acid and 4,4'-oxybisbenzoic acid, 3,6-dichlorophthalic acid, tetrachlorophthalic acid, tetrahydrophthalic acid, hexahydroterephthalic acid, hexachloroendomethylenetetrahydrophthalic acid, endomethylenetetrahydrophthalic acid, phthalic acid, azelaic acid, sebacic acid, decanedicarboxylic acid, adipic acid, succinic acid and trimellitic acid. These illustrative acids can be used in their acid form or where available, in the form of their anhydrides, acyl chlorides or lower alkyl esters. Mixtures of acids can also be used. In addition hydroxycarboxylic acids and lactones can be used. Examples include hydroxypivalic acid and ε-caprolactone.

Polyalcohols, in particular diols, can be reacted with the carboxylic acids or their analogues as described above to prepare the polyester. Examples of polyalcohols include aliphatic diols, for example, ethylene glycol, propane-1,2-diol, propane-1,3-diol, butane-1,2-diol, butane-1,4-diol, butane- 1,3-diol, 2,2-dimethylpropane-1,3-diol (neopentyl glycol), hexane-2,5-diol, hexane-1,6-diol, 2,2-bis- (4-hydroxycyclohexyl)-propane (hydrogenated bisphenol-A), 1,4-dimethylolcyclohexane, diethylene glycol, dipropylene glycol and 2,2-bis[4-(2-hydroxyethoxy)- phenyl]propane, the hydroxypivalic ester of neopentylglycol and 4,8-bis-(hydroxymethyl)tricyclo[5,2,1,0]decane (= tricyclodecane dimethylol) and 2,3-butenediol.

Trifunctional or more functional alcohols (together: polyols) or acids can be used to obtain branched polyesters. Examples of suitable polyols and polyacids are glycerol, hexanetriol, trimethylolethane, trimethylolpropane, pentaerythritol and trimellitic acid.

Monofunctional acids, for example para-tert-butyl benzoic acid, benzoic acid, metha-toluic acid, cinnamic acid,

crotonic acid may be used to block the polymer chain.

Preferably, the resin in the powder coating composition of the present invention is a polyester prepared from at least the following monomers: terephthalic acid, neopentylglycol and/or propylene glycol. For branching trimethylolpropane may be present in the polyester.

The polyesters can be prepared via customary, generally known polymerization methods by esterification and/or transesterification or by esterification and/or transesterification via the use of an enzyme. For example, if needed, customary esterification catalysts such as, for example, butylchlorotindihydroxide, dibutyltin oxide, tetrabutyl titanate or butyl stannoic acid can be used. Examples of amounts of these esterification catalysts used are usually around 0.1 wt% based on the total weight of the polyester.

The conditions of preparation of the polyester and the COOH/OH ratio can be chosen such that end products are obtained which have an acid value or hydroxyl value which is within the intended range of values.

Preferably, the viscosity of the polyester resin is in the range of from 2 to 30 Pa.s as measured at 160°C using the method as described herein.

The resin can also be a polyacrylate, also known as acrylic resin. Generally, an acrylic resin is based on alkyl esters of (meth)acrylic acid optionally in combination with styrene. These alkyl esters of (meth)acrylic acid may be replaced by hydroxyl or glycidyl functional (meth)acrylic acids. Examples of alkyl esters of (meth)acrylic acid include, for example ethyl (meth)acrylate, isopropyl (meth)acrylate, n-butyl (meth)acrylate, n-propyl (meth)acrylate, isobutyl (meth)acrylate, ethylhexyl acrylate, cyclohexyl (meth)acrylate and mixtures thereof.

To obtain an acrylic resin having a hydroxyl functionality, the acrylic resin contains a hydroxyl functional (meth)acrylic acid, preferably in combination with alkyl esters of (meth)acrylic acid. Examples of hydroxyl functional (meth)acrylic acid esters include hydroxyethyl (meth)acrylate, and hydroxypropyl (meth)acrylate etc..

To obtain an acrylic resin having a glycidyl functionality, the acrylic resin contains a glycidyl functional (meth)acrylic acid esters, preferably in combination with alkyl esters of (meth)acrylic acid. Examples of glycidyl functional (meth)acrylic acid esters include glycidyl methacrylate, etc..

Clearly, it is also possible to synthesize acrylic resins with both hydroxyl and glycidyl functionality.

Polyurethanes can for example be prepared using customary, generally known polyaddition reaction of a (poly)isocyanate with a (poly)alcohol in the presence of, if needed a catalyst and other additives.

For example, if needed, customary catalysts such as, for example tertiary amines or organometallic compounds, such as for example monobutyltin tris(2-ethylhexanoate), tetrabutyl titanate or dibutyl tin dilaurate can be used. Examples of amounts of these catalysts used are usually around 0.01 wt% based on the total weight of the resin.

Examples of the (poly)alcohols that may be used in the preparation of polyurethanes are the same as those that can be used in the preparation of a polyester.

Examples of isocyanates that may be used in the preparation of polyurethanes include but are not limited to diisocyanates, for example toluene 2,4-diisocyanate, toluene 2,6-diisocyanate, 4,4'-diphenyl methane diisocyanate, 2,4'-diphenyl methane diisocyanate, 2,2'-diphenyl methane diisocyanate, hexamethylene diisocyanate, 5-isocyabato-1-(isocyanatomethy)-1,3,3-trimethylcyclohexane (isophorone diisocyanate), m-tetramethylxylene diisocyanate, dicyclohexylmethane 4,4'-diisocyanate, naphthalene 1,5-diisocyanate or 1,4-diisocyanatobenzene; and triisocyanates, for example triphenylmethane-4,4',4"-triisocyanate.

The resin may also be a polyepoxide, also known as epoxy resin. Epoxy resins may for example be prepared from phenolic compounds in combination with epichlorohydrins resulting in epoxy resins like for example a bisphenol A diglycidyl ether such as is commercially available as Epicote™1001 or a Novolac epoxide.

Polyamides can for example be prepared by a polycondensation reaction of a diamine and a dicarboxylic acid.

The dicarboxylic acids may be branched, non-linear or linear.

Examples of suitable dicarboxylic acids are for example phthalic acid, isophthalic acid, terephthalic acid, 1,4-cyclohexanedicarboxylic acid, naphthalene-2,6-dicarboxylic acid, cyclohexanediacetic acid, diphenyl-4,4'-dicarboxylic acid, phenylenedi (oxyacetic acid), sebacic acid, succinic acid, adipic acid, glutaric acid and/or azelaic acid.

Examples of suitable aliphatic diamines include for example isophorondiamine, 1,2-ethylenediamine, 1,3-propylenediamine, 1,6-hexamethylenediamine, 1,12-dodecylenediamine, 1,4 cyclohexanebismethylamine, piperazine, p-xylylenediamine and/or m-xylylenediamine. The polyamide may also be branched using branching components. Suitable examples of branching components include amines, for example di-alkylene-triamines, such as for example di-ethylene-triamine or di-hexamethylene-triamine; di-alkylene-tetramines or di-alkylene- pentamines; acids, for example 1,3,5-benzene tricarboxylic acid, trimellitic anhydride or pyromelitic anhydride; and poly-functional amino acids, such as for example aspartic acid or glutamic acid.

Polyester amides are resins containing both ester bonds (as in a polyester) and amide bonds (as in a polyamide) and may for example be prepared from mono-, di-, tri- or polyfunctional monomers, such as monomers with carboxylic acid functionality, monomers with hydroxyl functionality, monomers with amine functionality and/or monomers having a combination of any of these functionalities.

In principle any solid hydroxyl functional polycarbonate may be used. Hydroxyfunctional polycarbonates are

commercially available from various sources.

Polyureas can for example be prepared using customary, generally known polyaddition reactions of a (poly)isocyanate with a (poly)amine in the presence of, if needed a catalyst and other additives similar to what is described above for polyurethanes. Suitable (poly)amines for the preparation of polyureas include those as are exemplified above for the polyamides. Suitable (poly)isocyanates for the preparation of polyureas include those as are exemplified above for the polyurethanes.

The reactive unsaturation may be built into the resin backbone, for instance by reacting a hydroxyl functional monomer (such as the polyalcohols mentioned before) with an unsaturated carboxylic acid or anhydride, such as for example fumaric acid, maleic acid, citraconic acid, itaconic acid or mesaconic acid. Resins where it is possible to build reactive unsaturation into the backbone by reacting a hydroxyl functional monomer with an unsaturated carboxylic acid are for example polyesters.

Also, the reactive unsaturation may be connected to a side-group on the resin, by reacting an epoxide functional pendant group in the resin, for example a glycidyl functional acrylate, with an unsaturated carboxylic acid, such as for example methacrylic acid or acrylic acid or the monoesters of fumaric acid, maleic acid, citraconic acid, itaconic acid or mesaconic acid.

Also, the reactive unsaturation may be connected to a side-group on the resin, by reacting a hydroxyl functional pendant group in the resin, for example a hydroxyl functional acrylate, with an unsaturated carboxylic acid, such as for example methacrylic acid or acrylic acid or an unsaturated carboxylic anhydride, such as for example the anhydrides of itaconic acid, maleic acid or citraconic acid.

It is also possible to connect the reactive unsaturation to the terminus (or termini) of the resin, for example by reacting a hydroxyl functional, epoxide functional or amine functional terminal group with an unsaturated carboxylic acid, such as for example fumaric acid, maleic acid, citraconic acid, itaconic acid, mesaconic acid or the monoesters thereof, methacrylic acid or acrylic acid. So, a resin having a hydroxyl, amine or glycidyl terminal group may be reacted with such carboxylic acids.

Also, or alternatively, hydroxyl or amine functional resins may be modified with hydroxyl functional compounds containing a reactive unsaturation via reaction with a diisocyanate forming urethane and/or urea bonds. This modification may be done both on pendant hydroxyl groups and on terminal hydroxyl groups.

Sometimes also a small amount of inhibitor is present during the esterification to prevent loss of unsaturations due to the possible presence of peroxides in glycols and instability due to the esterification temperatures.

The weight per unsaturation (WPU) of the resin as determined using $^1$H NMR is usually less than 7500, preferably less than 1500, for example less than 1150 or less than 1100 or less than 1000 g/mole and/or preferably more than 100, more preferably more than 250 g/mole, for example more than 500 g/mole.

In case of an amorphous resin, the glass transition temperature (Tg) of the resin is preferably at least 20°C, more preferably at least 25°C. Preferably, the resin is a polyester having a Tg of at least 40, preferably at least 45°C and/or a Tg of at most 65°C, preferably at most 60°C, for example at most 55°C, for example at most 50°C.

The amount of acid groups in a resin is determined by the titration of the acid/anhydride groups by KOH. The amount of acid groups is expressed as the acid value (AV) in mg KOH/g resin.

The amount of hydroxyl groups in a resin is determined by the titration of the hydroxyl groups with acetic anhydride and the back titration with KOH. The amount of hydroxyl groups is expressed as the hydroxyl value (OH-value or OHV) in mg KOH used per g resin.

A resin is classified as acid functional in case the hydroxyl value is lower than the acid value. In case a carboxylic functional resin is desired, the hydroxyl value of the resin is usually below 10 mg KOH per g resin.

A resin is classified as hydroxyfunctional in case the acid value is lower than the hydroxyl value. In case a hydroxyl functional resin is desired, the acid value of the resin is usually below 10 mg KOH per g resin.

The hydroxyl value of the resin in the powder coating composition of the present invention is usually in the range of from 0 to 70 mg KOH per g resin.

It is desired to have a resin, preferably a polyester, with an acid value of less than 10, preferably less than 5 mg KOH per g resin in with the vinylester co-crosslinker.

The number average molecular weight (Mn) of the resin is in principle not critical and can for example be from 1,000 to 20,000 Da. Preferably, the Mn of the resin is at least 1,500 Da, for example at least 2,000 Da and/or preferably at most 8,000, for example at most 4,000 Da in case of an amorphous resin and/or preferably at most 15,000 Da in case of a crystalline resin. Preferably, the resin is a polyester having a number average molecular weight (Mn) in the range of from 1,500 to 8,000, for example in the range of from 2,100 and 4,000Da.

The powder coating composition of the invention comprises a vinyl ester compound having a molecular weight (Mn) of at most 800Da comprising at least one vinylester moiety of formula (1)

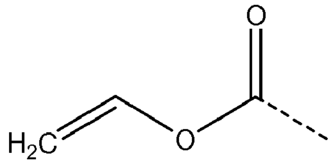

(1)

Preferably, the Mn is at most 700, for example at most 600, at most 500, at most 400, at most 300 or at most 250Da. Preferably, the Mn is at least 50, for example at least 100 or 150Da.

The weight per unsaturation (WPU) of the vinylester as determined using $^1$H NMR is preferably at least 50, for example at least 75 g vinylester /mole unsaturation. Preferably, the WPU of the vinylester is at most 500, for example at most 400, at most 300, at most 200 or at most 150 g vinylester /mole unsaturation.

The vinylester of formula 1 may be a monomer, oligomer or polymer. As defined herein, a monomer has an Mn below 500Da, an oligomer has an Mn below 1,500Da and a polymer has an Mn of at least 1,500Da.

Examples of vinylesters include mono functional vinylesters, for example stearic acid vinylester, palmitic acid vinylester, benzoic acid vinylester, lauric acid vinylester, hexanoic acid vinylester, pivalic acid vinylester, oleic acid vinylester, methacrylic acid vinylester, decanoic acid vinylester, bromo acetic acid vinylester, myristic acid vinylester, valeric acid vinylester, nonanoic acid vinylester, heptanoic acid vinylester, phenyl acetic acid vinylester, maleic acid (di)vinylester, undecanoic acid vinylester, iodo acetic acid vinylester, 2-naphthoic acid vinylester, 3-chloro-butyric acid vinylester, 4-chloro-butyric vinylester and 2-chloro-butyric acid vinylester; di functional vinylesters, such as for example adipic acid divinylester, fumaric acid divinylester, sebacic acid divinylester, phthalic acid divinylester and terephthalic acid divinylester and polyfunctional vinylesters, for example trimellitic acid trivinylester.

The synthesis of vinylesters is known and is for example described in Lussi, H., Vinyl esters of aromatic carboxylic acids, Kunststoffe-Plastics (1956) volume 3, pp 156-159 or in Hopff, M., Studies on vinylesters and vinyl imides, Bulletin de la Societe Chimique de France (1958), pp. 1283-1289 or in Hoppf, H. Vinylesters of aryl carboxylic acids, Makromolekulare Chemie (1956), vol 18/18, pp 227-238 or in DE2005-102005055852. Also, some vinylesters are commercially available, for example divinylester adipate is commercially available from ABCR. Vinyl acetate, vinyl acrylate, vinyl benzoate, vinyl pivalate and vinyl stearate are commercially available from Aldrich. Divinylester terephthalate may for example be synthesized according to or analogous to the methods as described above.

Preferably, the vinylester is an aromatic vinylester and/or a divinylester, most preferably an aromatic divinylester.

The amount of vinylester used in the powder coating composition is in principle not critical. The molar ratio of the unsaturations in the vinylester and the reactive unsaturations in the resin may be between 9:1 and 1:9, preferably between 2:1 and 1:2. Preferably, about equimolar amounts of unsaturations in the vinylester and the resin are used.

The WPU can for example be determined using $^1$H-NMR, for example as described in Journal of Applied Polymer Science, Vol. 23, 1979, pp 25-38, the complete disclosure of which is hereby incorporated by reference, or by the method as described herein in the experimental section. In the method of the experimental section, the weight per unsaturation (WPU) was determined via $^1$H-NMR on a 300 MHz Varian NMR-spectrometer using pyrazine as internal standard.

Alternatively, especially in the case of non polymeric/oligomeric compounds, the WPU may be determined theoretically by dividing the Mn by the amount of unsaturations added during the synthesis of the resin of of the vinylester.

The curing of the powder coating composition according to the invention takes place by means of heat that is, the powder coating composition is heat curable. With the term 'thermal initiation system' as used herein is meant the system that triggers the radical polymerization. The thermal initiation system comprises a radical initiator. The thermal initiator in the thermal initiation system upon heating generates (free) radicals able to initiate polymerization of the reactive unsaturations in the resin in combination with the unsaturated groups in the vinylester or the polymerization of the reactive unsaturations in the resins.

The terms 'thermal initiator', 'radical initiator' and 'initiator' are used interchangeably herein.

The radical initiator may be any radical initiator known to the person skilled in the art. Examples of radical initiators include, but are not limited to azo compounds such as for example azo isobutyronitrile (AIBN), 1,1'- azobis(cyclohexanenitrile), 1,1'-azobis(2,4,4-trimethylpentane), C-C labile compounds such as for example benzpinacole, peroxides and mixtures thereof.

Preferably, the initiator in the initiating system is a peroxide.

The peroxide may for example be a percarbonate, a perester or a peranhydride. Suitable peranhydrides are for example benzoylperoxide (BPO) and lauroyl peroxide (commercially available as Laurox™). Suitable peresters are for instance t-butyl per benzoate and 2-ethylhexyl perlaurate. Suitable percarbonates are for example di-t-butylpercarbonate and di-2-ethylhexylpercarbonate or monopercarbonates.

The choice of peroxide is in principle not critical and can be any peroxide known to the person skilled in the art for being suitable for use in radical curing of unsaturated resins. Such peroxides include organic and inorganic peroxides,

whether solid or liquid (including peroxides on a carrier); also hydrogen peroxide may be applied. Examples of suitable peroxides include for example, peroxy carbonates (of the formula -OC(O)O-), peroxyesters (of the formula -C(O)OO-), diacylperoxides, also known as peranhydrides (of the formula -C(O)OOC(O)-), dialkylperoxides or perethers (of the formula -OO-), hydroperoxides (of the formula -OOH), etc. The peroxides may also be oligomeric or polymeric in nature. An extensive series of examples of suitable peroxides can be found, for instance in US 2002/0091214-A1, paragraph [0018], hereby incorporated by reference.

Preferably, the peroxide is chosen from the group of organic peroxides. Examples of suitable organic peroxides are: tertiary alkyl hydroperoxides (such as, for instance, t-butyl hydroperoxide), other hydroperoxides (such as, for instance, cumene hydroperoxide), special class of hydroperoxides formed by the group of ketone peroxides (perketones, being an addition product of hydrogen peroxide and a ketone, such as, for instance, methyl ethyl ketone peroxide, methyl isobutylketone peroxide and acetylacetone peroxide), peroxyesters or peracids (such as, for instance, t-butyl peresters, benzoyl peroxide, peracetates and perbenzoates, lauroyl peroxide, including (di)peroxyesters, -perethers (such as, for instance, peroxy diethyl ether). It is of course also possible to use mixtures of peroxides in the powder coating composition of the present invention. Also, the peroxides may be mixed peroxides, i.e. peroxides containing any two different peroxy-bearing moieties in one molecule.

Especially suitable for use in the present invention are any of the following initiators: peranhydrides, for example benzoyl peroxide or lauroyl peroxide; peroxydicarbonates, for example di(4-t-butylcyclohexyl)-peroxydicarbonate, dicetyl peroxydicarbonate, dimyristylperoxydicarbonate.

The choice of thermal initiation system is in principle not critical. However depending on the choice of initiating system the preferred temperature for curing may be tuned.

The terms thermal initiation system and initiation system are used interchangeably herein.

In one embodiment, the initiation system consists of a (mixture of) thermal initiator(s). For instance when the curing should be achieved at temperatures of at least 150°C, benzpinacols for example benzopinacol; perethers, for example 2,5-dimethyl-2,5-di(t-butyl peroxy)hexane (Trigonox 101), di-tert-butyl peroxide (TrigonoxB), di(tert-butylperoxyisopropyl)benzene (Perkadox 14), dicumylperoxide (Perkadox BC-FF), and hydroperoxides, for example tert-butyl hydroperoxide (Trigonox A80 or Trigonox AW70) or hydroperoxides, for example ketone peroxides, for example methylethylketone(hydro)peroxide (Butanox M50), acetylacetone(hydro)peroxide (Trigonox 44B) may be used.

For curing in the temperature range of from 130 to 160°C peresters, for example tert-butyl peroxybenzoate (Trigonox C), tert-butyl peroxyacetate (Trigonox F-C50), tert-amyl peroxybenzoate (Trigonox 127), tert-amyl peroxyacetate (Trigonox 133-CK60), tert-butyl-2-ethylhexanoate (Trigonox 21 S), tert-butylperoxydiethylacetate (Trigonox 27) or monopercarbonates, for example tert-butyl peroxy-2-ethylhexylcarbonate (Trigonox 117), tert-butyl peroxyisopropylcarbonate (Trigonox BPIC75), tert-amylperoxy-2-ethylhexylcarbonate (Trigonox 131) or ketal peroxides, for example 1,1-di(tert-butylperoxy)3,3,5-trimethylcyclohexane (Trigonox 29), di(tert-amylperoxy)cyclohexane (Trigonox 122-C80) may be applied.

For curing in the temperature range of from 90 to 130°C peranhydrides for example dibenzoylperoxide, dilauroylperoxide, didecanoylperoxide (Perkadox SE-1 0), di(3,5,5-trimethylhexanoyl)peroxide (Trigonox 36-C75) or azocompounds for example 2,2'-azodi(isobutyronitrile) (AIBN), 2,2-azodi(2-methylbutyronitrile) or 1,1'-azodi(hexahydrobenzonitrile) or peresters, for example di-tert-butylperoxypivalate (Trigonox 25-C75), tert-butyl peroxyneoheptanoate (Trigonox 257-C75), cumylperoxyneodecanoate (Trigonox 99-C75) may suitably be used.

For curing in the range of from 60 to 100°C dipercarbonates, for example dimyristylperoxydicarbonate (Perkadox 26), dicetylperoxydicarbonate (Perkadox 24), di(2-ethylhexyl)peroxydicarbonate (Trigonox EHP), di-isopropyl peroxydicarbonate (Perkadox IPP-NS27), a mixture of peroxydicarbonates (Trigonox ADC) or di-sec-butyl peroxydicarbonate (Trigonox SBP) may be used.

It should be noted that Trigonox, Perkadox and Butanox are trademarks from Akzo Nobel.

However, according to another embodiment, the thermal initiation system may further comprise an accelerator to increase the reactivity of the thermal initiator.

The accelerator may be chosen from the group of amines preferably tertiary amines or aromatic amines: diamines, polyamines, acetoacetamides, ammonium salts, transition metal catalysts or mixtures thereof.

Preferably, the accelerator is chosen from the group of transition metal catalysts of transition metals with atomic numbers from/equal to 21 and up to/equal to 79. Therefore, the invention also relates to a powder coating composition, wherein the thermal radical initiation system further comprises a transition metal catalyst.

In chemistry and physics, the atomic number (also known as the proton number) is the number of protons found in the nucleus of an atom. It is traditionally represented by the symbol Z. The atomic number uniquely identifies a chemical element. In an atom of neutral charge, the atomic number is equal to the number of electrons. Preferred examples of suitable transition metal catalysts are those salts and complexes of Mn, Fe, Co or Cu. Preferably, the transition metal catalyst is chosen from the group of salts or complexes of Co, Cu, Fe, Mn and mixtures thereof. From an environmental perspective, it is most preferred to use salts or complexes of Mn, Fe or Cu.

The transition metal catalysts are preferably chosen from the group of transition metal salts or complexes or

mixtures thereof, preferably from the group of organic metal salts or complexes, most preferably organic acid metal salts or derivatives thereof, for example transition metal carboxylates or transition metal acetoacetates, for example transition metal ethylhexanoate. If a copper catalyst is used, it may for example be in the form of a copper$^{+}$ salt or a copper$^{2+}$ salt. If a manganese catalyst is used, it may for example be in the form of a manganese$^{2+}$ salt or a manganese$^{3+}$ salt. If a cobalt catalyst is used, it may for example be in the form of a cobalt$^{2+}$ salt.

In yet another embodiment, one or more inhibitors are present in the initiation system. The inhibitor may be added to the initiation system prior to mixing with the resin or alternatively, the inhibitor may be added during the resin synthesis.

Examples of inhibitors are preferably chosen from the group of phenolic compounds, stable radicals, catechols, phenothiazines, hydroquinones, benzoquinones or mixtures thereof.

Examples of phenolic compounds include 2-methoxyphenol, 4-methoxyphenol, 2,6-di-t-butyl-4-methylphenol, 2,6-di-t-butylphenol, 2,6-di-6-butyl-4-ethyl phenol, 2,4,6-trimethyl-phenol, 2,4,6-tris-dimethylaminomethyl phenol, 4,4'-thio-bis(3-methyl-6-t-butylphenol), 4,4'-isopropylidene diphenol, 2,4-di-t-butylphenol and 6,6'-di-t-butyl-2,2'-methylene di-p-cresol.

Examples of stable radicals include 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL and galvinoxyl (2,6-di-tert-butyl-$\alpha$-(3,5-di-tert-butyl-4-oxo-2,5-cyclohexadien-1-ylidene)-p-tolyloxy).

Examples of catechols include catechol, 4-t-butylcatechol, and 3,5-di-t-butylcatechol.

Examples of hydroquinones include hydroquinone, 2-methylhydroquinone, 2-t-butylhydroquinone, 2,5-di-t-butylhydroquinone, 2,6-di-t-butylhydroquinone, 2,6-dimethylhydroquinone and 2,3,5-trimethylhydroquinone.

Examples of benzoquinones include benzoquinone, 2,3,5,6-tetrachloro-1,4-benzoquinone, methylbenzoquinone, 2,6-dimethylbenzoquinone, and napthoquinone.

Other suitable inhibitors may for example be chosen from the group of an aluminium-N-nitrosophenyl hydroxylamine, a diethylhydroxylamine and a phenothiazine.

It is also possible to use a mixture of (the above mentioned) inhibitors. Preferably as an inhibitor hydroquinones or catechols are used, more preferably a hydroquinone is used.

According to yet another embodiment, the intiation system comprises both an inhibitor and an accelerator, preferably a transition metal catalyst. For example, the initiation system may comprise a perester, for example tert-butylperoxybenzoate; or a monopercarbonate, a transition metal catalyst, for example a salt or complex of Co, Cu, Fe, Mn and an inhibitor, for example a catechol or hydroquinone, preferably a hydroquinone.

The amount of initiation system used is preferably such that when the powder coating composition of the invention is applied to a substrate and cured at a temperature of 130°C for 20 minutes, the resulting coating resists at least 50, preferably at least 70 acetone double rubs. A method for measuring the acetone double rubs is described herein.

The preparation of powder coating compositions is described by Misev in "Powder Coatings, Chemistry and Technology" (pp. 224-300; 1991, John Wiley) hereby incorporated by reference.

A common way to prepare a powder coating composition is to mix the separately weighed-out components in a premixer, heat the obtained premix, for example in a kneader, preferably in an extruder to obtain an extrudate, cool down the obtained extrudate until it solidifies and crush it into granules or flakes that are further grinded to reduce the particle size followed by appropriate classification to obtain a powder coating composition of the right particle size. Therefore, the invention also relates to a process for the preparation of a powder coating composition according to the invention comprising the steps of:

a. mixing the components of the powder coating composition to obtain a premix
b. heating the obtained premix, preferably in an extruder, to obtain an extrudate
c. cooling down the obtained extrudate to obtain a solidified extrudate and
d. breaking the obtained solidified extrudate into smaller particles to obtain the powder coating composition.

Preferably, the premix is heated to a temperature at least 5°C, more preferably at least 10°C below the temperature at which it is intended to cure the powder coating composition. If the premix is heated in an extruder, it is preferred to use a temperature control in order to avoid too high temperatures that could lead to curing of the powder coating composition in the extruder.

The powder coating composition of the present invention may optionally contain the usual additives, such as for example fillers/pigments, degassing agents, flow agents, or (light) stabilizers. It should be noted that none of these usual additives are considered to be transition metal compounds. Examples of flow agents include Byk™ 361 N. Examples of suitable fillers/pigments include metal oxides, silicates, carbonates or sulphates. Examples of suitable stabilizers include UV stabilizers, such as for example phosphonites, thioethers or HALS (hindered amine light stabilizers). Examples

of degassing agents include benzoin and cyclohexane dimethanol bisbenzoate. Other additives, such as additives for improving tribochargeability may also be added.

In another aspect, the invention relates to a process for coating a substrate comprising the following steps:

1) applying a powder coating composition according to the invention to a substrate (such that the substrate is partially or fully coated with a coating).
2) heating the (obtained partially or fully coated) substrate (for such time and to such temperature such that the coating is at least partially cured).

The powder coating composition of the present invention may be applied using the techniques known to the person skilled in the art, for example using electrostatic spray or electrostatic fluidized bed.

Heating of the coated substrate may be done using conventional methods, such as with a convection oven and/or with an (N)IR lamp. Even microwave equipment may be used to heat the substrate.

The time during which the coating is at least partially cured is preferably below 60 minutes and usually above 1 minute in case a convection oven is used to heat the coating. More preferably, the curing time is below 40 minutes in case a convection oven is used to heat the coating.

The temperature at which the coating is cured is preferably below 130°C and usually above 60°C. Preferably, the curing temperature is lower than 120°C, more preferably lower than 110°C, most preferably lower than 100°C, most preferably lower than 95°C. Preferably, the curing temperature is at least 65°C, more preferably 70°C, even more preferably at least 75°C.

In another aspect, the invention relates to a substrate that is fully or partially coated with a powder coating based on the heat-curable powder coating composition according to the present invention.

In one embodiment of the invention the substrate is a non heat-sensitive substrate, for example glass, ceramic, fibre cement board, or metal, for example aluminum, copper or steel. In another embodiment of the invention, the substrate is a heat-sensitive substrate. Therefore, the invention also relates to use of a powder coating composition of the invention to coat a heat-sensitive substrate, preferably wood.

Heat-sensitive substrates include plastic substrates, wood substrates, for example solid wood, such as for example: hard wood, soft wood, plywood; veneer, particle board, low density fibre board, medium density fibreboard and high density fibreboard, OSB (Oriented Strand Board) wood laminates, chipboard and other substrate in which wood is a important constituent, such as for example foil covered wooden substrates, engineered wood, plastic modified wood, plastic substrates or wood plastic compounds (WPC); substrates with cellulosic fibres, for example cardboard or paper substrates; textile and leather substrates.

Other heat-sensitive substrates include objects that are a combination of a metal substrate with a heat-sensitive part, such as plastic hosing, heavy metal parts, strips, for example aluminium frames with heat strips etc.

Examples of plastic substrates include unsaturated polyester based compositions, ABS (acrylonitril butadiene styrene), melamine-formaldehyde resins, polycarbonate, polyethylene, polypropylene, ethylene-propylene-diene monomer (EPDM), thermoplastic olefin (TPO), polyurethane (PU), polypropylene oxide (PPO), polyethylene oxide (PEO), polyethyleneterephthalate and nylon, for example polyamide 6,6 and combinations thereof, for example polycarbonate-ABS.

Other substrates that are particularly suitable for coating with the powder coating of the invention are those where a low temperature cure is desired for efficient production, such as heavy metal parts.

In another aspect, the invention relates to the use of a composition according to the invention to fully or partially coat a substrate.

Also, the invention relates to the use of a powder coating composition according to the invention as a stain, primer or topcoat layer.

Specific wood coating markets where the powder coating composition of the invention may be used include domestic furniture, such as tables, chairs, cabinets, etc., bedroom and bathroom furniture, office furniture, contract furniture such as school and child furniture, hospital furniture, restaurant and hotel furniture, kitchen cabinets and furniture, (flat) panels for interior design, interior and exterior windows and doors, interior and exterior window frames and door frames, exterior and interior sidings and wooden flooring.

Specific plastic coating markets where the powder coating composition of the invention may be used include automotive applications, such as interior car parts, wheel covers, bumpers, under the hood parts etc, flexible flooring, sporting goods, cosmetics, audio-visual applications, such as TV sets, computer housing, phones, etc., household appliances and satellite dishes.

In a special embodiment, the invention relates to the use of a powder coating composition of the invention to coat a heat-sensitive substrate, preferably wood.

Examples

Synthesis and application of the powder coating

Table 1: Chemicals

| Chemical name | (commercial) name | Description or use |
|---|---|---|
| Propylene glycol | | Monomer |
| Neopentyl glycol | | Monomer |
| Trimethylol propane | | Monomer |
| Hydrogenated bis-phenol A | | Monomer |
| Terephthalic acid | | Monomer |
| Isophthalic acid | | Monomer |
| Fumaric acid | | Monomer |
| Ethylene carbonate | | Monomer |
| 2,3-epoxy propyl neodecanoate | | monomer |
| Adipic acid divinyl ester | Co-crosslinker I | Co-crosslinker |
| Terephthalic acid divinyl ester | Co-crosslinker II | Co-crosslinker |
| Butanediol divinyl ether | Co-crosslinker III | Co-crosslinker |
| Tri(ethyleneglycol) divinyl ether | Co-crosslinker IV | Co-crosslinker |
| Dilauroyl peroxide | Laurox™ S from Akzo Nobel | Initiator |
| Tert-butyl peroxybenzoate | Trigonox™ C from Akzo Nobel | Initiator |
| Tert-butyl hydroquinone | | Inhibitor |
| Cobalt bis(2-ethylhexanoate), also known as Cobalt octanoate | COMMET™ Cobalt Octanoate from De Monchy International B.V. | Accelerator |
| | Byk™ -361 N from Byk | Flow agent |

Synthesis of resins: General procedure

The chemicals used in the following examples are described in table 1.

Resin synthesis (resin A, B)

A reaction vessel fitted with a thermometer, a stirrer and a distillation device, was filled with a tin catalyst and the monomers for the first step (all the (poly)alcohols and terephthalic acid) as listed in table 2. Stirring was then applied and a light nitrogen flow was passed over the reaction mixture while the temperature was raised to 220°C. Subsequently, for the second step fumaric acid together with a small amount of radical inhibitor was added at a temperature of 180°C followed by esterification at 220°C. When an acid value of less than approximately 15 mg KOH/g resin was reached, the reaction mixture was cooled to 205°C. The third stage of the polyester preparation was carried out under reduced pressure at 205°C till an acid value of approximately 5 mg KOH/g resin was reached. The acid value of the resin was brought below 5 mg KOH/g resin via reaction of the remaining acid-groups of the resin with an epoxy or an alkylene carbonate group (see table 2 which chemical is used). The used amount was dependent on the acid value before addition.

Resin and co-crosslinker analysis:

Glass transition temperature (Tg) measurements (inflection point) and melting temperature measurements were carried out via differential scanning calorimetry (DSC) on a Mettler Toledo, TA DSC821, in $N_2$ atmosphere and at a heating rate of 5°C/min. Viscosity measurements were carried out at 160°C, on a Rheometric Scientific CT 5 (Rm 265)

apparatus (Mettler Toledo). A 30 mm spindle was used. The applied shear-rate was $70s^{-1}$. The acid and hydroxyl values of the resins were determined titrimetrically according to ISO 2114-2000 and ISO 4629-1978, respectively.

The weight per unsaturation (WPU) was determined via $^{1}H$-NMR on a 300 MHz Varian NMR-spectrometer using pyrazine as internal standard. Recorded spectra were analyzed in full with ACD software and peak areas of all peaks were calculated.

The weight resin per mole unsaturation was calculated with the following formula:

$$WPU = \left[ \frac{W_{pyr}}{W_{resin}} \frac{1}{MW_{pyr}} \frac{A_{c=c} / N_{c=c}}{A_{pyr} / N_{pyr}} \right]^{-1}$$

$W_{pyr}$ and $W_{resin}$ are weights pyrazine (is internal standard) and resin, respectively, expressed in the same units. $MW_{pyr}$ is molecular weight pyrazine (= 80 gr/mole). $A_{c=c}$ is the peak area for hydrogens attached to the carbon carbon double bonds of the reactive unsaturations (C=C component) in the resin; $N_{c=c}$ is the number of hydrogens of that particular C=C component. $A_{pyr}$ is the peak area for pyrazine and $N_{pyr}$ is the number of hydrogens (= 4).

Table 2 Synthesis and properties of the resins used

| Resin no. | A | B |
|---|---|---|
| Monomers | Amount (mole %) | Amount (mole %) |
| Propylene glycol | 48.2 | |
| Neopentylglycol | | 47.9 |
| Trimethylol propane | 3.4 | 3.7 |
| Terephthalic acid | 38.5 | 37.5 |
| Fumaric acid | 9.9 | 10.9 |
| Ethylene carbonate | | X |
| 2,3-epoxy propyl neodecanoate | X | |
| Resin characterization | | |
| Weight per unsaturation (WPU) (theoretical) | 999 | 1028 |
| Weight per unsaturation (WPU) (measured with NMR) | 1170 | 1130 |
| Mn (theoretical) | 2521 | 2723 |
| Hydroxyl value (mg KOH/g) | 53.2 | 42.7 |
| Acid value (mg KOH/g) | 1.5 | 3.1 |
| Tg (°C) | 51.9 | 46.5 |
| Viscosity at 160°C (Pa.s) | 33.3 | 21.2 |

Table 3 Properties of the co-crosslinkers

| Co-crosslinker | I | II | III | IV |
|---|---|---|---|---|
| Type | Vinyl ester | Vinyl ester | Vinyl ether | Vinyl ether |
| Co-crosslinker characterization | | | | |
| Mn (theoretical) | 198 | 218 | 142 | 202 |
| Weight per unsaturation in g/mole (WPU) (theoretical) | 99 | 109 | 71 | 101 |
| Phase | Liquid | Solid | Liquid | Liquid |
| Tm (°C) | | 84 | -8 | -13 |

Preparation of the powder coating composition, application and analysis:

The compositions of the tested powder coating composition are given in the tables below. The components were extruded at 60°C using a Prism Twin Screw extruder (200 rpm, torque > 90%). The extrudate was grinded and sieved; the sieving fractions smaller than 90 microns were used as a powder coating composition. The powder coating compositions were applied with a corona powder application spray gun on an aluminum ALQ panel and cured at various temperatures for 15 minutes in a convection oven (Heraeus UT 6120). The applied coating layer thickness was approximately 60 μm.

Acetone double rubs

Acetone double rubs (ADR) were carried out as described herein to determine the curing.
Within the framework of the invention, an acceptable cure is defined as the ability of a powder coating composition cured for 15 minutes to withstand at least 50 acetone double rubs (ADR), more preferably at least 70 acetone double rubs. The cure temperature (in °C) at which the powder coating composition can withstand at least 50 ADR or at least 70 ADR is defined herein as the $T >_{50\ ADR}$ , respectively $T_{70\ ADR}$. For purposes of the invention, this temperature is less than 130°C.

Preparation of the powder coating composition

The ratio resin : co-crosslinker is chosen 2:1 on mole unsaturation in example 1 and the ratio resin:co-crosslinker is chosen 1:1 on mole unsaturations in example 2. The amount of initiator in the initiation system is based on the total weight of the resin system (e.g. x mole initiator per kg resin system; the resin system is the resin containing the reactive unsaturations plus the co-crosslinker, excluding usual powder coating composition additives like pigments, fillers etc.). The amount of inhibitor in the initiation system is based on the total weight of the resin system. The amount of accelerator in the initiation system is based on the total weight of the resin system (e.g. x mole accelerator per kg resin system). The amount of flow agent is calculated in wt% of the total powder coating composition. In all powder coating compositions, 0.8wt% of flow agent was used, unless indicated differently.

Example 1.

Table 4 Influence of the co-crosslinker on the processing in the extruder and on the cure of the powder coating composition.

| Exp-# | 1.1 | 1.2 | 1.3 | 1.4 |
|---|---|---|---|---|
| Resin | A | A | A | A |
| Co-crosslinker | I | II | III | IV |
| | Vinyl ester | Vinyl ester | Vinyl ether | Vinyl ether |
| Initiation system | | | | |
| Initiator | Trigonox™ C 61.0 mmol/kg | Trigonox™ C 61.0 mmol/kg | Trigonox™ C 61.0 mmol/kg | Trigonox™ C 61.0 mmol/kg |
| Inhibitor | Tert-butyl hydroquinone 500 ppm | Tert-butyl hydroquinone 500 ppm | Tert-butyl hydroquinone 500 ppm | Tert-butyl hydroquinone 500 ppm |
| Accelerator | Co 12 mmol/kg | Co 12 mmol/kg | Co 12 mmol/kg | Co 12 mmol/kg |
| | | | | |
| Extrusion | Ok | Ok | Ok | Ok |
| $T_{> 50\ ADR}$ (°C) | 110 | 110 | >130 | >130 |
| $T_{> 70\ ADR}$ (°C) | 110 | 110 | >130 | >130 |

As can be seen from the above table, the use of a vinylester as a co-crosslinker in a powder coating composition results in a coating having a good cure at a relatively low temperature. This is remarkable in light of the fact that generally vinylethers are more reactive compared to vinylesters in radical polymerization with fumaric acid containing resins.

Example 2.

Table 5 Chemical (staining) resistance.

| | |
|---|---|
| Exp-# | 2.1 |
| Resin | B |
| Co-crosslinker | II |
| Initiation system | |
| Initiator | Laurox™ S 80.2 mmol/kg |
| Inhibitor | Tert-butyl hydroquinone 100 ppm |
| | |
| Extrusion | Ok |
| $T_{>50\ ADR}$ (°C) | 110 |
| $T_{>70\ ADR}$ (°C) | 110 |
| Chemical Resistance (DIN 68861-1A of the year 1997) 5 = good and 0 = bad | |
| Red wine (16 h) | 5 |
| Coffee (16 h) | 5 |
| Ketchup (16 h) | 5 |
| Sambal (16 h) | 4 |
| Mustard (16 h) | 4 |

As can be seen from table 5, the presence of vinylesters in a powder coating composition of the invention results in a coating having very good chemical resistance as indicated by the high numbers found for the chemical resistance (staining) test for red wine, coffee, ketchup, sambal and mustard.

**Claims**

1. Heat-curable powder coating composition comprising

- a resin containing reactive unsaturations
- a vinyl ester having a molecular weight (Mn) of at most 800Da comprising at least one vinylester moiety of formula (1)

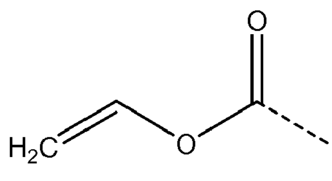

(1)

- a thermal initiation system comprising a radical initiator.

2. Composition according to claim 1, wherein the powder coating composition is a one component system.

3. Composition according to claim 1, wherein the powder coating composition is a two component system.

4. Composition according to any one of claims 1-3, wherein the vinylester is an aromatic vinylester and/or a divinylester, most preferably an aromatic divinylester.

5. Composition according to any one of claims 1-4, wherein the radical initiator comprises a peroxide, preferably a perester or monopercarbonate..

6. Composition according to any one of claims 1-5, wherein the thermal radical initiation system further comprises an accelerator, preferably a transition metal catalyst.

7. Composition according to claim 6, wherein the transition metal catalyst is a Mn, Fe, Co or Cu salt or complex.

8. Composition according to any one of claims 1-7, wherein the thermal initiation system further comprises an inhibitor, preferably a hydroquinone.

9. Composition according to any one of claims 1-8, wherein the amount of thermal initiation system is chosen such that when the powder coating composition is applied to a substrate and cured at a temperature of 130°C for 20 minutes, the resulting coating resists at least 50 acetone double rubs.

10. Composition according to any one of claims 1-9, wherein the resin is a polyester.

11. Process for the preparation of a powder coating composition according to any one of claims 1-10 comprising the steps of:

    a. mixing the components of the powder coating composition to obtain a premix
    b. heating the premix, preferably in an extruder, to obtain an extrudate
    c. cooling down the extrudate to obtain a solidified extrudate and
    d. breaking the solidified extrudate into smaller particles to obtain the powder coating composition.

12. Process for coating a substrate comprising the following steps:

    1) applying a powder coating composition according to any one of claims 1-10 to a substrate
    2) heating the substrate.

13. Substrate that is fully or partially coated with a powder coating composition according to any one of claims 1-10.

14. Use of a powder coating composition of any one of claims 1-10 to coat a heat-sensitive substrate.

15. Use according to claim 14, wherein the heat-sensitive substrate is wood.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 2005102005055852
- US 20020091214 A1


### Non-patent literature cited in the description


- **G. MAGGIORE.** Overview of the powder coatings market worldwide. *Pitture e Vernice Europe,* January 1992, 15-22
- **D. RICHART ; WATERBORNE.** Powder Coating: Current Developments, Future Trends. *High-Solids and Powder Coatings Symposium,* 22 February 1995
- **LUSSI, H.** *Vinyl esters of aromatic carboxylic acids, Kunststoffe-Plastics,* vol. 3, 156-159
- **HOPFF, M.** Studies on vinylesters and vinyl imides. *Bulletin de la Societe Chimique de France,* 1958, 1283-1289
- **HOPPF, H.** Vinylesters of aryl carboxylic acids. *Makromolekulare Chemie,* 1956, vol. 18/18, 227-238
- *Journal of Applied Polymer Science,* 1979, vol. 23, 25-38
- **MISEV.** Powder Coatings, Chemistry and Technology. John Wiley, 1991, 224-300